# EUROPEAN PATENT SPECIFICATION

(11) **EP 4 408 900 B1**
(45) Date of publication and mention of the grant of the patent: **19.11.2025**
(21) Application number: 22769998.0
(22) Date of filing: 01.09.2022
(51) Int. Cl.: C08F 6/00, C08F 6/14, C08F 6/22

(54) **METHOD FOR REDUCTION OF DISCOLORATION IN LATEX POLYMERS**
VERFAHREN ZUR VERMINDERUNG DER VERFÄRBUNG IN LATEXPOLYMEREN
PROCÉDÉ DE RÉDUCTION DE LA DÉCOLORATION DANS LES POLYMÈRES DE LATEX

(30) Priority: 29.09.2021 EP 21199672
(43) Date of publication of application: 07.08.2024
(73) Proprietor: SABIC Global Technologies B.V., 4612 PX Bergen op Zoom (NL)
(72) Inventor: ALSUBAIE, Nasser Mansour, 6160 GA Geleen (NL); LI, Dejin, 6160 GA Geleen (NL)
(74) Representative: Sabic Intellectual Property Group
(86) International application number: PCT/EP2022/074274
(87) International publication number: WO 2023/052024

(56) References cited:
- EP-A1- 1 840 154
- WO-A1-2010/028907
- US-A- 5 173 214
- US-A- 5 753 772

## Description

### BACKGROUND

Latex polymer, particularly styrenic polymers and styrenic elastomers, have various uses. These styrenic polymers can be copolymers with styrenic monomers and acrylonitrile monomers, optionally with a third comonomer such as a conjugated diene monomer (e.g., butadiene) or an alkyl acrylate (e.g., butyl acrylate). Specifically, these polymers can be acrylonitrile-butadiene-styrene (ABS) copolymers, acrylonitrile styrene acrylate (also referred to as acrylic styrene acrylonitrile) copolymers (ASA) and styrene acrylonitrile copolymers (SAN).

Color can be a critical-to-quality property of such polymers. U.S. 10,421,826 sought to achieve better resin base color by reducing biological growth in latex storage systems of emulsion polymerization processes. Specifically, U.S. 10,421,826 disclosed means of limiting biological growth to less than 1000 CFU/ml during storage by limiting aging time, limiting storage temperature, cleaning the storage system, flushing pipelines with chlorine, using biocides, and/or illuminating with UV radiation.

RU2160286C1 disclosed adding hydrogen peroxide simultaneously with a coagulant to limit odor at high processing temperatures.

A simple and convenient means for improving color is still sought.

### BRIEF DESCRIPTION

Disclosed herein is a method comprising providing a polymer latex comprising particles of polymer in aqueous dispersion wherein the polymer particles comprise polymers of one or more of vinyl aromatic monomers, acrylic monomers, preferably acrylonitrile monomers, and conjugated diene monomers, adding a peroxide in an amount of 0.005 to 5, preferably 0.01 to 4, parts by weight peroxide per 100 parts by weight of dried polymer to the polymer latex at a pH of at least 8.5, preferably at least 9, and, after the adding of the peroxide, coagulating the polymer latex. Particularly, the peroxide can be provided for a contact time of at least 2 minutes. Contact time is defined herein as the time from initiation of the addition of the peroxide until the initiation of coagulation.

The above described and other features are exemplified by the following detailed description.

### DETAILED DESCRIPTION

The process disclosed herein involves providing a polymer latex. A polymer latex is a stable dispersion of polymer particles in aqueous media. Such latex can be formed, for example, by emulsion polymerization or suspension polymerization. The polymer particles can be copolymers of ethylenically unsaturated aromatic monomers (e.g., vinyl aromatic monomers) and ethylenically unsaturated nitrile monomers (e.g., vinyl cyanide monomer). Generally, monomeric compounds are reacted with a free radical initiator in solution to induce the polymerization process. The vinyl aromatic monomer can, for example, be one described by the following formula (II): 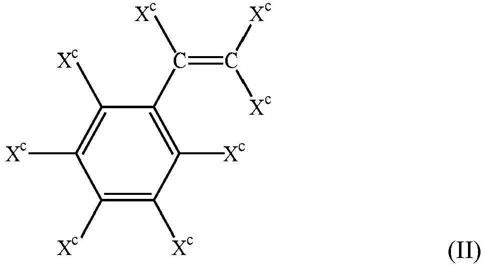 wherein X^{c} is hydrogen, C₁-C₁₂ alkyl (including cycloalkyl), C₆-C₁₂ aryl, C₇-C₁₂ aralkyl, C₇-C₁₂ alkaryl, C₁-C₁₂ alkoxy, C₆-C₁₂ aryloxy, chlorine, or bromine. Examples of ethylenically unsaturated aromatic monomers include styrene, alpha-ethyl styrene, halostyrenes such as, for example, dibromostyrene, mono- or dialkyl, alkoxy or hydroxy substituted groups on the nuclear ring of the monovinylidene aromatic monomer (e.g., vinyl toluene, vinylxylene, butyl styrene, para-hydroxy styrene or methoxy styrene), or mixtures thereof.

The acrylonitrile or substituted acrylonitrile monomers can, for example, be one described by the following formula (III): 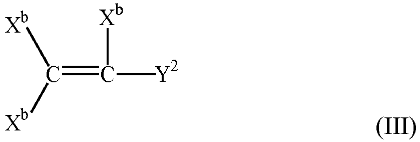 wherein X^{b} is X^{b} is hydrogen, C₁-C₅ alkyl, chlorine, or bromine, and Y² is cyano. Examples of ethylenically unsaturated nitrile monomers include acrylonitrile and substituted vinyl cyanides such as methacrylonitrile, acrylonitrile, ethacrylonitrile, alpha-chloroacrylonitrile, and alpha-bromoacrylonitrile.

Additional potential comonomers can include alkyl acrylates or aryl methacrylates. Examples of comonomers include methyl acrylate, ethyl acrylate, butyl acrylate, 2-ethylhexyl acrylate, cyclohexyl acrylate, benzyl acrylate, isopropyl acrylate, methyl methacrylate, ethyl methacrylate, butyl methacrylate, isopropyl methacrylate, isodecyl methacrylate, cyclohexyl methacrylate, benzyl methacrylate, acrylamide, methacrylamide, vinylidine chloride, vinylidine bromide, vinyl esters, such as, vinyl acetate, and vinyl propionate, dialkyl maleates or fumarates such as dimethyl maleate, diethyl maleate, dibutyl maleate, dimethyl fumarate, diethyl fumarate, and dibutyl fumarate.

An emulsifier can be used. For example, the emulsifier can include a fatty acid soap or a high molecular weight alkyl or alkaryl sulfate or sulfonate.

The copolymers can further include an elastomer of a diene monomer. The diene monomer can have the formula can be, for example, one described by the following formula (I): 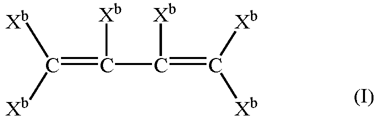 wherein X^{b} is hydrogen, C₁-C₅ alkyl, chlorine, or bromine. Examples of diene monomers include butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures comprising at least one of the foregoing conjugated diene monomers. For example, the ethylenically unsaturated aromatic monomers and/or ethylenically unsaturated nitrile monomers and/or any additional monomers can be polymerized in the presence of a diene elastomer such as a polybutadiene, styrene-butadiene rubber (SBR), acrylonitrile-butadiene rubber (NGR), homopolymers of chloroprene, homopolymers of isoprene, copolymers of butadiene with isoprene, or chloroprene, 2-methyl-1,3-butadiene, 2,3-dimethyl-1,3-butadiene, 1,2-propadiene, 1,4-pentadiene, 1,5-hexadiene, 1,2-pentadiene or acrylonitrile butadiene styrene (ABS). This elastomer can be homogenized, unhomogenized direct growth or chemically or colloidally agglomerated. In an example, the elastomer can be a polybutadiene latex for the preparation of acrylonitrile butadiene styrene.

The latex can be made by aqueous emulsion polymerization in the presence of a free radical initiator, a surfactant and, optionally, a chain transfer agent and homogenized to form particles of rubber phase material. Additional unsaturated monomers can then be graft polymerized onto the rubber substrate to provide the final copolymer resin. In an example, acrylonitrile butadiene styrene (ABS) can be prepared by grafting styrene and acrylonitrile monomers onto a homogenized polybutadiene latex via emulsion polymerization.

As an example, preparation of a latex such as an acrylonitrile/butadiene/styrene copolymer (ABS) latex can comprise a first and a second stage. In the first stage, a rubber latex can be prepared and in the second stage, monomers can be grafted onto the rubber substrate via emulsion polymerization. For example, a first stage can comprise the generation of a polybutadiene latex (the rubber substrate) upon which acrylonitrile and styrene monomers are grafted in the second stage. The first and second stage can proceed through a characteristic emulsion polymerization process. As an example, a first stage can involve combining water, unsaturated monomers, an emulsifier, a chain transfer agent, various additives, and an initiator to form an initial liquid batch. The initial liquid batch can be combined in a vessel and heated to from 54 degrees Celsius (°C) (130 degrees Fahrenheit (°F)) to 79 °C (175 °F) to provide a rubber latex, suitable for use as a rubber substrate in a second stage. In a further example, an acrylonitrile styrene acrylate latex can be prepared by grafting styrene and acrylonitrile monomers onto a poly butyl acrylate latex via an emulsion polymerization process.

The latex can be prepared according to a number of polymerization processes and according to a number of variations to the process itself with respect to reagents and reaction conditions. As an example, the latex can be generated according to a batch process or a semi-batch process. As another example, the latex can be generated through a continuous polymerization process. Batch and continuous polymerization can refer to the conditions through which the polymerization proceeds. In a batch process, reagents can be placed in a reactor, the reagents mixed and heated, and the polymerization reaction allowed to proceed typically without interruption. In a semi-batch process, reagents can continue to be introduced to the reaction system through a feed stream during the polymerization process. For a continuous process, the reactant system can be continuously fed to, and removed from at a reaction rate such that the total volume of the system undergoing reaction at any given instant can remain constant. More than one batch can be combined to form the provided polymer latex.

A number of reagents can be used in the emulsion polymerization process. The relative quantities and/or concentrations of one or more reagents for the polymerization process can be selected and varied, for instance depending on a target speed of reaction and/or a target or intended relative component composition of the intermediate product formed via the polymerization process.

An initial liquid batch can be introduced into a reactor vessel. For example, the polymerization can proceed in a closed reactor, or in a series of vessels or reactors. The vessel can vary in range, from, for example, 1 liter to as large as 75,700 liter (20,000 gallons). It will be understood that other vessels and/or reactors of different volumes can also be used for the polymerization process and can be easily and/or conveniently scaled for industrial manufacture or production of a desired resin product. For example, the vessel can have a capacity of at least 3.5 kg liquid volume occupied. The volume of the vessel can refer to the internal volume of the vessel available for occupation by the liquid and vapor containing the applicable reagents. In an example, the initial liquid batch can be introduced into the reaction vessel in an amount sufficient to occupy 40 % to 80 % of the volume of the vessel, more preferably from 50 % to 70 % thereof, and most preferably from 50 % to 60 % thereof.

A feedstream comprising the reagents making the initial liquid batch can be continuously supplied to the reaction vessel. The reaction pressure can be maintained between 238 to 1134 kPa (20 to 150 psig) depending on the reaction temperature. The rate of reaction can peak during the first two hours of the reaction when the vapor space is greatest in the vessel.

The reaction time of the polymerization process to provide a polybutadiene latex, for example, can be from 5 hours to 20 hours with the reaction temperature ranging from 54.4 °C (130 °F) to 79.4 °C (175 °F) in a closed reactor vessel. In an example, the temperature of the contents of the vessel can be increased by using a heating system, for example a hot steam jacket system. Other heating systems, for instance heating systems or heaters known in the related art, can also be used for changing, and/or maintaining, the temperature of the vessel. The contents of the vessel can be stirred to mix using a stirrer or agitator, for example.

In a further example, an acrylonitrile styrene acrylate latex can be prepared by grafting styrene and acrylonitrile monomers onto a poly butyl acrylate latex via an emulsion polymerization process. The latex for subsequent storage can be prepared according to a number of polymerization processes and according to a number of variations to the process itself with respect to reagents and reaction conditions. As an example, the latex can be generated according to a batch process or a semi-batch process. As another example, the latex can be generated through a continuous polymerization process. Batch and continuous polymerization can refer to the conditions through which the polymerization proceeds. In a batch process, reagents can be placed in a reactor, the reagents mixed and heated, and the polymerization reaction allowed to proceed typically without interruption. In a semi-batch process, reagents can continue to be introduced to the reaction system through a feed stream during the polymerization process. For a continuous process, the reactant system can be continuously fed to, and removed from at a reaction rate such that the total volume of the system undergoing reaction at any given instant can remain constant.

A first stage polymerization of monomers can provide a rubber latex substrate, such as polybutadiene latex, for the preparation of a copolymer resin, such as ABS or ASA. There are a number of suitable monomers available for use in the polymerization system. Suitable monomers can include vinyl aromatic monomers and vinyl cyanide (unsaturated nitrile) monomers. Monovinylidiene aromatic monomers (vinyl aromatic monomers) which can be employed include styrene, alpha-ethyl styrene, halostyrenes (dibromostyrene), mono- or dialkyl, alkoxy or hydroxy substituted groups on the nuclear ring of the monovinylidiene aromatic monomer (vinyl toluene, vinylxylene, butylstyrene, para-hydroxystyrene or methoxystyrene, or mixtures thereof. Suitable vinyl cyanide monomers can include acrylonitrile and substituted vinyl cyanides such as methacrylonitrile, acrylonitrile, ethacrylonitrile, alpha-chloroacrylonitrile, and alpha-bromoacrylonitrile. For the preparation of a polybutadiene, the monomers can comprise butadiene and isoprene as well as various monomers, which can be present to produce copolymers of butadiene with up to 50 % by weight of monomers such as styrene, acrylonitrile, methylmethacrylate or C1 - C6 alkylacrylate. In other examples, up to 35 % by weight of monomers is added. The monomers listed herein can be appropriate for both the preparation of the rubber latex substrate generated in the first stage as well as the graft polymerization of the second stage.

An exemplary emulsion polymerization process can provide an ASA latex, which can also proceed according to a first and a second stage. In the first stage, the rubber latex can be prepared upon which monomers can be grafted in a second stage via emulsion polymerization. For an ASA latex, a first stage can comprise the generation of a poly butyl acrylate latex (the rubber substrate) upon which acrylonitrile and styrene monomers are grafted in the second stage. The first and second stage can proceed through a characteristic emulsion polymerization process. In one example, a first stage can proceed through a continuous emulsion polymerization process where water, unsaturated monomers, an emulsifier or emulsifier package, a cross-linking agent, various additives, and an initiator are combined in a single vessel to which the reagents are added and removed at a rate such that the volume of reagents ant any given instant is constant. For instance, to prepare the precursory poly butyl acrylate latex for the ASA latex, 95 parts by weight to 100 parts by weight of butyl acrylate, up to 5 parts by weight of a cross-linking agent, a redox initiator (as described herein); and 1 part by weight to 5 parts by weight of a an emulsifier can be fed into a reactor vessel at 48.9 °C (120 °F) to 73.9 °C (165 °F). The resultant mixture can provide a poly butyl acrylate rubber substrate onto which unsaturated monomers can be grafted to provide a grafted rubber latex. As an example, suitable unsaturated monomers can comprise acrylonitrile and styrene to provide a grafted ASA latex.

An appropriate chain transfer agent can be added to the emulsion polymerization systems of the present disclosure to improve the properties of the final resin product. In an example, the chain transfer agent can be added continuously during the feed portion of a semi-batch polymerization process to provide a rubber latex. In other instances, for example, during a batch addition, the chain transfer agent can be added at the beginning of the reaction. The chain transfer agent can function as a molecular weight modifier. Appropriate chain transfer agents can include, for example, organic sulphur compounds, such as C1-C15 alkyl mercaptans, n-, i-, and t-dodecyl mercaptan (t-DDM). The amount of chain-transfer agent (CTA) can vary according to the particular chain-transfer agent, the monomer or mixture of monomers employed, the initiator employed, the polymerization reaction conditions, and so forth. In an example, the chain transfer agent can be added in the range of from 0.1 to 3 weight parts of chain transfer agent per 100 weight parts of the monomer. In further examples, the amount of chain transfer agent used can be from 0.1 to 2 weight parts of chain transfer agent per 100 weight parts of the monomer.

A portion of the chain transfer agent can be added with the initial batch of reagents introduced into the reaction vessel, while the rest can be introduced during a continuous feed during a polymerization process where continuous feed is employed. In one example, from 10 % to 50 % of the chain transfer agent can be added with the initial batch of reagents introduced into the reaction vessel and the rest can be added via a continuous stream. In other examples, all of the chain transfer agent can be added via the continuous feed.

For example, in the preparation of a poly butyl acrylate rubber substrate, a cross-linking agent can be used to facilitate the emulsion polymerization process. In one example, the cross-linking agent can comprise a composition having a multiple carbon-carbon double bonds, or multiple allyl groups. As a further example, the composition can cyanurate comprise triallyl cyanurate.

A stabilizer or emulsifier can be added to the emulsion polymerization process in such a manner that the final particle size of the finished latex can be controlled. Emulsifier can refer to a molecule with a hydrophobic end and a hydrophilic end. Emulsifiers appropriate for the polymerization process as described herein can include anionic emulsifiers, such as higher fatty alcohol sulphates, higher alkyl sulphonates, alkylaryl sulphonates, aryl sulphonates, together with the condensation products thereof with formaldehyde, salts of sulphosuccinic acid esters and sulphated ethylene oxide adducts; non-ionic emulsifiers, including the known reaction products of ethylene oxide and fatty alcohols, such as lauryl, myristyl, cetyl, stearyl and oleyl alcohol, with fatty acids, such as lauric, myristic, palmitic, stearic and oleic acid, and the amides thereof, and with alkylphenols, such as isooctyl-, isonoyl-, and dodecylphenol. An emulsifier can typically be used in quantities of 0.1 wt. % to 10 wt. %, more specifically, 0.2 wt. % to 8 wt. % based on the total quantity of monomers used.

A free radical initiator can be used during the emulsion polymerization process. Suitable free radical initiators can include water soluble initiators, such as for example, peroxide compounds, especially inorganic persulfate compounds including ammonium persulfate, potassium persulfate, and sodium persulfate; peroxides such as for example hydrogen peroxide; organic hydroperoxides, such as for example cumene hydroperoxide, t-butyl hydroperoxide, acetyl peroxide, lauroyl peroxide; peracetic acid and perbenzoic aid; redox initiators wherein a water soluble reducing agent such as a ferrous compound with reductants promotes the decomposition of, for example, peroxides or persulfates; as well as other free radical producing materials such as, for example, 2,2'-azobisisobutyronitrile or 4,4'-azobis(4-cyanovaleric acid). The initiator can be a high activity redox initiator such as cumene hydroperoxide or other hydroperoxides in combination with other compounds such as reducing agents, heavy metal salts and complexing agents. The initiator can be added to provide an initial reaction rate of at least 10 % of the total monomer of the reaction reacted per hour. The reaction rate can convert from 15 % to 20 % of the total monomer. The free radical initiator can be introduced with the feed of reagents. Introducing the free radical initiator with the feed can maximize the heat generated early in the polymerization process.

Additional optional additives can be used in the emulsion polymerization process. These additives can include inorganic and organic salts. Additional optional additives can include electrolytes, reducing agents, heavy metal salts and complexing agents.

The emulsion polymerization process of the present disclosure can proceed through a semi-batch process to provide a rubber latex, such as polybutadiene latex. The semi-batch process can comprise introducing an initial liquid batch containing water, an emulsifier, and unsaturated monomers. This initial liquid batch can further optionally comprise an initiator, monomers, as well as chain transfer agents and additives. A liquid feed comprising monomer and a chain transfer agent as well as optional comonomers and initiator dissolved in water can be introduced into the initial liquid batch. Finally, the vessel can be cooled during continuous feeding and then the monomers reacted during and after the continuous feeding. In an example, the rate of feeding can be such that the level of unreacted monomer is minimized and peak heat generation can occur early in the polymerization process.

In one example for the preparation of a polybutadiene latex, suitable unsaturated monomers of the initial batch contained in the reaction vessel can include 11% butadiene monomers, 86 % water, 0.23 % t-DDM, 1.2 % TFA, 0.06 % KOH, 0.23 % TSPP, 0.03% SFS, 0.0006% FeSO4, and 0.002% Na2EDTA. The initial batch can be feed into the reaction vessel for a starting volume of from 50% to 60% at a temperature of from 50°C to 70°C, such as 62.8 °C (145 °F) and pressure of 790 to 824 kPa (100 to 105 PSIG). A continuous feed to the reaction vessel can comprise remaining diene monomer, chain transfer agents, and remaining reagents to the reaction vessel over a period of time at a controlled rate to a final temperature of 70°C to 80 °C, such as 71.1 °C (160 °F) and pressure between 341-410 kPa (35 - 45 PSIG) for a monomer conversion of more than 90 mol %, such as 94 mol %, based on the total moles of diene monomer used after 8 hours to 9 hours. A polybutadiene latex having an average particle size of between 60 nanometers (nm) and 120 nm can be provided.

The formed latex can serve as a rubber substrate for the graft polymerization of the second stage of the emulsion polymerization process. The latex can be agglomerated or homogenized. The agglomeration process can increase the average particle size of the suspended latex particles upon which the monomers can be grafted. This substrate can be homogenized, or direct growth or chemically or colloidally agglomerated. The rubber latex substrate can remain unhomogenized prior to the graft polymerization process. When the graft reaction can be carried out in semi-batch, batch, or continuous fashion, it can be desirable to utilize a homogenized substrate. Typically, the average particle size of the substrate can be 150 nm to 500 nm. If direct growth substrate is employed, the particle size distribution can be 60 nm to 500 nm.

A second stage of the emulsion polymerization process can provide a grafted rubber latex, such as acrylonitrile butadiene styrene (ABS) latex. Monovinylidene aromatic hydrocarbon monomers (for example, styrene) and ethylenically unsaturated nitrile monomers can be polymerized into a rubber substrate prepared according to the first stage as described herein. In an example, a graft (emulsion) polymerization to provide a grafted rubber latex (e.g., an ABS latex), can include charging the reaction system with a substrate such as a diene rubber latex (polybutadiene latex), adding a first portion of at least one of a styrene and one of an acrylonitrile to the polybutadiene latex, adding to the reaction system over a predetermined time a catalyst (the free radical initiator) and a second portion of at least one of acrylonitrile and styrene monomers, and polymerizing the catalyzed reaction mixture of polybutadiene latex, styrene and acrylonitrile. The graft polymerization process can also include an emulsifier, and chain transfer agent. In one example, a portion of substrate, monomers, initiator(s), emulsifiers and chain transfer agent can be added at various times including before or at the beginning of the addition of monomer, during the addition of monomer, at or after the completion of the addition monomer.

In an example, an initial feedstream comprising water, surfactant (or emulsifier), and the rubber latex substrate can be introduced into a reactor system and a pre-soak operation can be carried out. The pre-soak can include the addition of at least one of a monomer or a combination of monomers. More specifically, for the production of an ABS latex, the feedstream can comprise water, surfactant (emulsifier), and polybutadiene latex into which a pre-soak of at least one of styrene, acrylonitrile, or a mixture thereof is added . In other examples, no pre-soak is added. In various further examples, there is no addition of the first portion of styrene and/or acrylonitrile before the addition of the initiator.

The temperature of the contents of the reaction vessel can be increased, for example, to approximately 65.5 °C (150 °F) and maintained at that temperature during continuous feed into the vessel. Once the feeds are completed, the reactor can be continuously stirred to mix using a stirrer or agitator until a high conversion (95.0 % to 99.9 %) is obtained. The increased or elevated temperature can be maintained for between approximately 30 minutes and 3 hours, for example 1 hour. By maintain the temperature for said period of time (e.g., approximately 1 hour), the polymerization process can be completed. The contents of the vessel can then be cooled. A third monomer in addition to those of the pre-soak can be added after monomer conversion has surpassed 98%. The addition of the third monomer can minimize the amount of residual monomers or unreacted styrene and acrylonitrile. The conversion rate can be based upon the total conversion rate of the monovinylidiene aromatic hydrocarbon monomers and the ethylenically unsaturated nitrile monomers. The resultant ABS latex can have a low content of unreacted residual monomers. This third monomer can be added to the emulsion grafting reaction after the 98% monomer conversion point is selected on the basis of being highly reactive with the monomer formulation, including both the monovinylidiene aromatic hydrocarbon monomer (e.g., styrene) and the ethylenically unsaturated nitrile monomer (e.g., acrylonitrile). The third monomer can be a monomer having a low boiling point, that is, a boiling point below 121.1 °C (250 °F). The low boiling point of the third (additional) monomer can allow for the monomer to be readily volatized during the recovery of a resin (such as an ABS resin) from a latex (ABS latex) by coagulation, washing, and drying.

An additional (third) monomer can include at least one of methyl acrylate, ethyl acrylate, butyl acrylate, 2-ethylhexyl acrylate, cyclohexyl acrylate, benzyl acrylate, isopropyl acrylate, methyl methacrylate, ethyl methacrylate, butyl methacrylate, isopropyl methacrylate, isodecyl methacrylate, cyclohexyl methacrylate, benzyl methacrylate, acrylamide, methacrylamide, vinylidine chloride, vinylidine bromide, vinyl esters, such as, vinyl acetate, and vinyl propionate, dialkyl maleates or fumarates such as dimethyl maleate, diethyl maleate, dibutyl maleate, dimethyl fumarate, diethyl fumarate, and dibutyl fumarate. In one embodiment, the third monomer is selected from methyl acrylate and methyl methacrylate .

As used herein, substrate can refer to the rubber latex onto which the styrene and acrylonitrile are grafted. In one example, substrate can refer to a poly butyl acrylate latex. In various further examples, the substrate can be a polybutadiene latex (particularly for the preparation of an ABS latex) with an emulsifier dispersed throughout the aqueous medium of the latex. In an example, the emulsifier can be a fatty acid soap or a high molecular weight alkyl or alkaryl sulfate or sulfonate. In various further examples, the substrate can be a polybutadiene, styrene-butadiene rubber (SBR), acrylonitrile-butadiene rubber (NGR), homopolymers of chloroprene, homopolymers of isoprene, copolymers of butadiene with isoprene, or chloroprene, 2-methyl-1,3-butadiene, 2,3-dimethyl-1,3-butadiene, 1,2-propadiene, 1,4-pentadiene, 1,5-hexadiene, 1,2-pentadiene and ABS. This substrate can be homogenized, unhomogenized direct growth or chemically or colloidally agglomerated. In an example, the rubber substrate can be polybutadiene latex for the preparation of acrylonitrile butadiene styrene.

A free radical initiator can be used to propel the graft polymerization process. The initiators can include peroxides and/or azo compounds which are active in grafting and decompose into radicals. In addition to redox initiators, peroxy initiators which have the capability to provide free radicals to the reaction may also be used. Examples of appropriate initiators can include cumene hydroperoxide (CHP), sodium persulfate, potassium persulfate, ammonium persulfate, di-isopropylbenzene hydroperoxide, tertbutyl-peroxide, and 2-2'azo-bis-isobutyrylnitrile (AIBN), in combination with other compounds such as reducing agents, heavy metal salts and complexing agents. A single initiator system or multiple initiator additions over intervals of time can be employed. The initiator(s) can be added at various times including at the beginning of the addition of a third monomer, during the addition of a third monomer, at or after the completion of the addition of a third monomer.

Initiator can be added to the reaction system in an amount to provide sufficient initiator for the duration of the polymerization reaction. In another embodiment, the initiator or catalyst is included within the range of 0.01 percent by weight to 2 percent by weight of the polymerizable monomer. In a second embodiment, initiator is added in an amount of 0.1 wt. % to 0.5 wt. % of the polymerizable monomer. In yet another embodiment, initiator can be added during the addition of monomers to ensure favoring of the grafting reaction.

A post-shot addition of the initiator and/or a third monomer can be delayed until the conversion of styrene and acrylonitrile monomers is greater than 98% in one embodiment, or greater than 99% in another embodiment, or greater than 99.5% in a further embodiment, based on the original acrylonitrile monomer introduced to the reaction polymerization system.

Emulsifying agents which can be used in the graft polymerization process can include a fatty acid soap, an alkaline metal or ammonium soap of a high molecular weight alkyl or alkaryl sulfate or sulfonate, etc., in total amounts of 0.1 parts by weight to 8 parts by weight per 100 parts by weight of the monomer formulation.

The graft emulsion polymerization process can be carried out in a batch, semi-batch, or continuous operation. If in a semi-batch operation, then an initial charge of substrate including water, surfactant and polybutadiene can be made to a reaction system and at or after the completion of the initial charge, a pre-soak operation can be carried out which can include the addition of at least one of styrene, acrylonitrile, or a mixture of styrene and acrylonitrile.

The temperature of the reaction system can vary from 37.8 °C (100° F) to 93.3 °C (200° F), or from 48.8°C (120° F) to 82.2 °C (180° F), or from 54.4°C (130° F) to 71.1 °C (160° F). In certain examples, sufficient heat removal from the exothermic polymerization reaction system can be achieved by the use of heat exchangers so that the reaction system is maintained at a satisfactory temperature. The contents of the reaction vessel can be stirred to produce good dispersion of the reactor contents and the desired amount of heat transfer.

A third monomer can be added late in the reaction, the ratio of total styrene monomer added to acrylonitrile monomer added can be 1.5 to 1 to 4 to 1, or from 2 to 1 to from 3.5 to 1. The ratio of total diene rubber (e.g., polybutadiene latex) added to the total of styrene monomer and acrylonitrile monomer is 0.1 to 1 to 3.0 to 1, and in another exemplary embodiment, 0.2 to 1 to 2 to 1. At least one of acrylonitrile and styrene monomers can be added to the reaction system over a time of from 30 minutes to 200 minutes, or from 45 minutes to 160 minutes. The ratio of the first portion of styrene monomer to the second portion of styrene monomer can be 1 to 3 to 1 to 5 and the ratio of a first portion of acrylonitrile monomer to the second portion of acrylonitrile monomer is 1 to 3 to 1 to 5. A first portion of at least one of styrene monomer and acrylonitrile monomer or a mixture thereof is added to the polybutadiene emulsion. There can be one addition of styrene monomer and one addition of acrylonitrile monomer.

After permitting the reaction to proceed for 40 to 90 minutes after the addition of the initiator, the acrylonitrile monomer, and the styrene monomer is completed, 0.5 to 5.0 parts of a third monomer per 100 parts of total polymer and monomer, and/or additional initiator can be added to the reaction mixture.

The methods disclosed herein can provide for the preparation via emulsion polymerization of a polybutadiene latex rubber substrate, or a poly butyl acrylate rubber substrate, or other rubber substrate suitable for grafting through further emulsion polymerization with appropriate monomers and other reagents. The methods disclosed, however, are applicable to a number of other emulsion polymerization processes, or other polymerization processes which generates a latex phase or polymer suspension, such as suspension polymerization.

The polymer latex can have solids level of 25 to 50 or 30 to 45 weight percent based on total weight of the latex. In one example the latex can be an acrylonitrile butadiene styrene (ABS) latex, particularly with 30 to 80% butadiene rubber based on total weight of the ABS in the latex.

To obtain the dry polymer resin, the latex is coagulated. During the coagulation process, fine particulates agglomerate or clump together and accumulate at the top or settle at the bottom of the dispersion. These can then be separated or harvested via a filtration or centrifuge process.

In further instances, it is desirable to isolate the latex by coagulation in acid or salt. In such instances the emulsion polymer can be contaminated by residual acid, or species derived from the action of such acid, for example carboxylic acids derived from fatty acid soaps used to form the emulsion. The acid used for coagulation can be a mineral acid; such as sulfuric acid, hydrochloric acid, nitric acid, phosphoric acid or mixtures thereof. In some cases, the acid used for coagulation has a pH less than 5. Common coagulants can include acids such as sulfuric acid and can include salts having monovalent or multivalent ions. Exemplary coagulant reagents can thus include sodium chloride, sodium sulfate, calcium chloride, or ammonium acetate or other salts comprising a monovalent cation and a monovalent anion.

In many embodiments, the coagulation process can occur or is performed in a vessel, for example a 208-liter (55-gallon) vessel. The volume or capacity of the vessel for the coagulation process can be increased, for example for preparing or manufacturing ABS latex on an industrial scale. The vessel can be filled with water, for instance with 49 liters (13 gallons) of water. The latex for coagulation, coagulant, and other reagents (such as an initiator) can be added to the vessel and stirred. The temperature of the content of the vessel can be from 54 °C (130 °F) to 88 °C (190 °F) or greater. The mixture can be stirred resulting in an output slurry. The output slurry can be centrifuged to remove the water. The output wet resin can be dried in a fluidized-bed dryer for approximately 0.5 to 2 hours at a temperature of 49 °C (120 °F) to 71 °C (160 °F) or greater until the resin has a final moisture content of less than 2%.

The coagulation process can produce a resultant product, for example, an ABS resin, or an ASA resin. The resin can be produced as a suspended substance, product, or powder in water. More specifically, an obtained resin can include solid particles. As an illustrative example and not to be limiting, an ABS provided by various embodiments of the present disclosure can be used to manufacture plastics or plastic products, including those products that have a smooth or substantially smooth surface. Additionally, an isolated ABS resin can be used or combined with other plastic-based resins or additives to produce ABS plastic or ABS alloy with different thermal, mechanical, and electrical properties.

As disclosed herein, prior to coagulation of the polymer latex, a peroxide is added to the polymer latex.

The polymer latex can be combined with the peroxide immediately after or shortly after polymerization or the polymer latex can be stored for a period of time. The polymer latex treated with the peroxide can be a single batch or a combination of two or more batches. The time of storage can be 5 minutes or more, 1 hour or more, 3 hours or more, or 24 hours or more. At the same time, the time of storage can be several days, for example up to 7, up to 6, up to 5, up to 4, up to 3 days. The storage temperature can be 20 to 70°C.

The time from initiation of the addition of the peroxide until initiation of coagulation is defined herein as "contact time". Contact time can be at least 2 minutes, at least 5 minutes, or at least 10 minutes. At the same time, contact time can be, for example, up to 24, up to 12, up to 6, up to 3 hours, or up to sixty minutes, up to 30 minutes, or up to 20 minutes.

The addition of the peroxide to the polymer latex advantageously can occur shortly before coagulation. For example, the addition of the peroxide can begin within 3 hours, within 60 minutes, within 30 minutes, or within 15 minutes prior to beginning coagulation.

The pH during the contact time can be at least 8.5, or at least 9, or at least 9.5 and up to 12, or up to 11, or up to 10.5. The pH can be adjusted, for example, by addition of a base, such as, for example, potassium hydroxide, potassium carbonate, potassium bicarbonate, sodium hydroxide, sodium carbonate, sodium bicarbonate, lithium hydroxide, or if the pH is too high by addition of an acid, such as acetic acid.

The amount of peroxide added prior to coagulation can be 0.005 to 5, or 0.01 to 4, or 0.01 to 2, or 0.01 to 1, or 0.01 to 0.5, or 0.01 to 0.2 parts by weight based on 100 parts of dry resin. The peroxide can be an organic peroxide, an organic hydroperoxide, hydrogen peroxide or combinations thereof. Hydrogen peroxide can be used as a sole peroxide.

To facilitate good interspersing of the peroxide throughout the latex, mixing can occur during the contact time.

After completing the contact time, the polymer latex is coagulated and, optionally dried, as described above.

The dried resin can then be used or can be compounded with another resin. For example, an acrylonitrile butadiene styrene may be compounded with a styrene acrylonitrile copolymer.

The resulting resin shows good color. Color can be measured and Yellowness Index (YI) calculated according to ASTM E313-73. For example, the color can be measured using a colorimeter (e.g. Color-Eye 7000A from Gretag Macbeth). The colorimeter can be used, for example, in reflectance mode for pellets or transmittance mode for a color plaque (e.g. a molded disc) with a D65 illuminant, a 10° observer angle, and with the specular and UV components included. Yellowness Index (YI) can be obtained from spectrophotometric data that also provided values for colorimetric coordinates L*, a*, b*. The coordinates correspond to different color attributes: a* represents redness and green; b*, yellow and blue; and L*, whiteness. A higher value for YI indicates more yellowness in a sample. A higher value for L* indicates that the sample is whiter, or lighter, in color. Samples having a higher L* and lower a*, b*, and YI would tend to indicate improved whiteness in the overall color.

The resin obtained hereby can have an L* of at least 85, at least 86, or at least 87. The resin obtained hereby can have an a* of less than 0, of less than -1, of less than -1.5, or of less than -2. The resin obtained hereby can have a YI of less than 39, less than 38, less than 37, less than 36, less than 35, less than 34, or less than 33.

The process disclosed herein can increase the L* of the processed resin by at least 2, at least 2.5, at least 3, at least 3.5 or at least 4 as compared to a resin that is not contacted with a peroxide at a pH of 8.5 or more prior to coagulation. The process disclosed herein can increase the L* of the processed resin by at least 3% or more, 4% or more, 5% or more, or 6% or more as compared to a resin that is not contacted with a peroxide at a pH of 8.5 or more prior to coagulation. The process disclosed herein can decrease the YI of the processed resin by at least 1, at least 2, at least 3, at least 4, or at least 5 as compared to a resin that is not contacted with a peroxide at a pH of 8.5 or more prior to coagulation. The process disclosed herein can decrease the YI of the processed resin by 2.5% or more, 5% or more, 10% or more, or 15% or more as compared to a resin that is not contacted with a peroxide at a pH of 8.5 or more prior to coagulation. The process disclosed herein can decrease the a* of the processed resin by at least 1, at least 1.5, or at least 2 as compared to a resin that is not contacted with a peroxide at a pH of 8.5 or more prior to coagulation.

This disclosure is further illustrated by the following examples, which are nonlimiting.

### EXAMPLES

### Examples 1-7 and Control

A batch of High Rubber Graft (HRG) latex was produced by reacting styrene and acrylonitrile monomers with polybutadiene in a semi batch reaction. Polybutadiene latex, water, and REDOX (A Reduction Oxidation "REDOX" reaction occurs between multiple chemicals to generate free radicals of the initiator to start the polymerization reaction) additives are batch added at the beginning of the reaction cycle. The REDOX package includes Ferrous Sulfate (FeSO4), Tetrasodium Pyrophosphate (TSPP) and fructose work as an activation solution. When the reactor temperature reaches the set point ( about 57°C ), about 27 parts styrene, 9 parts of acrylonitrile, and 0.2 parts Cumyl Hydroperoxide (CHP) are fed continuously for about an hour. The reaction temperature is increased in order to drive the residual reactions faster. At the end of the reaction cycle, 3 parts of Methyl methacrylate (MMA) and 0.25 parts of CHP are added to drive the reaction to completion. The time from manufacture of the batch to performing the testing herein was at least 3 days.

A Control Sample was taken from the batch, coagulated and dried substantially. In the coagulation step, diluted sulfuric acid (H2SO4) was added to the coagulator tank under high temperature and agitation to break the HRG latex emulsion and coagulate the individual particles into larger agglomerates. Low pressure steam was introduced to the Coagulator from close to the bottom and is used to heat up the content and promote the mixing by generating a vortex in the Coagulator. During the coagulation process, some initial water was added to the vessel (55 kg, i.e.,55 liters). Then coagulant (0.97 kg of H2SO4, 10% activity) was added and the mixture was agitated and heated with steam to desired temperature (90.5 °C). The latex was then metered in and dropped onto the vortex surface. Under heat and chemical reaction with coagulant, the latex was broken instantaneously and forms particles. After the latex feed was completed (26 kg, i.e., 26 liters total), the temperature was increased by a few degrees ( 93°C) in order to "cook" the slurry. The cook time was 5 minutes. After that, the slurry in coagulator was cooled by jacket (49°C ) and water (22.7 kg, i.e., 22.7 liters)) was added to the slurry. The slurry is then pumped out from bottom of the vessel to centrifuge.

After pumping out the slurry to the centrifuge, the centrifuge was turned on and the basket will spin at a specified speed for a given amount of time (900 rpm for 5 minutes). After the timer expired, the wet resin cake was removed from the filter bag and transferred to the dryer basket.

The air was heated through the steam coil to the desired temperature (65.5°C for 30 minutes). The hot air flows through the wet resin from bottom of the basket causing some of the resin to fluidize. The basket stirrer keeps the resin in the basket evenly distributed.

Additional samples were taken from the batch and treated with varying levels of hydrogen peroxide at varying pH (through addition of diluted alkali (KOH) or acidic (acetic acid) solution as is necessary to arrive at the stated pH) and contact times as shown in Table 1. Upon completion of the contact time, these samples were coagulated and dried in the same manner as for the Control Sample.

The Samples were tested for color according to ASTM E313-73 as described herein.

The results as shown in Table 1 below demonstrate the effectiveness of the short contact with hydrogen peroxide at pH of 8.5 or above and particularly pH of 9 or above, in improving color of the resin as indicated by higher L* which is indicative of lightness and lower YI which is indicative of yellowness. At lower pH values the composition begins creaming (i.e., viscosity increases) such that it is no longer sufficiently flowable for further downstream processing to make a final resin powder.

**TABLE 1**

| Example | Control | 1 | 2 | 3 | 4 | 5 | 6 | 7 |
|---|---|---|---|---|---|---|---|---|
| H₂O₂ Level (parts per weight per 100 parts dry resin) | 0 | 0.01 | 0.01 | 0.01 | 0.2 | 0.2 | 3 | 3 |
| pH | 12 | 12 | 8.5 | 10 | 10 | 10 | 8.5 | 12 |
| Contact Time (min) | 0 | 5 | 5 | 60 | 30 | 5 | 60 | 5 |
| Holding Temp (°C) * | 40 | 40 | 40 | 70 | 55 | 70 | 70 | 70 |
| L* | 79.42 | 80.254 | 80.354 | 81.7 | 83.58 | 85.66 | 86.02 | 87.01 |
| a* | 1.304 | 0.956 | 0.734 | 0.1 | -0.954 | -2.31 | -2.712 | -3.134 |
| b* | 21.344 | 21.32 | 21.428 | 21.49 | 21.002 | 21.08 | 20.708 | 20.208 |
| YI | 43.928 | 43.238 | 43.154 | 42.22 | 39.736 | 37.81 | 36.924 | 35.434 |

| | | | | | | | | |
|---|---|---|---|---|---|---|---|---|
| ^{*}Holding Temperature control is done in a jacketed 10-gallon vessel equipped with an agitator before and during addition of the peroxide. | | | | | | | | |

### Examples 8-11

Latex polymer of high rubber graft acrylonitrile butadiene styrene latex was produced in a pilot plant with varying amounts of hydrogen peroxide (H₂O₂) added after polymerization and before coagulation. The coagulated polymer was compounded with SAN 576 styrene acrylonitrile and tested for impact on color. The among of H₂O₂ was 0.1, 0.3, 1.2 or 3.5 parts per hundred based on 100 parts of dry compounded resin. Results are shown in Table

### 2. The addition of the hydrogen peroxide increases the L* and decreases a* and YI.

| Color Parameter | ***Baseline*** | ***Product with H2O2 (parts*)*** | | | |
|---|---|---|---|---|---|
| | | ***0.1*** | ***0.3*** | ***1.2*** | ***3.5*** |
| ***L**** | ***85.01*** | ***86.54*** | ***86.84*** | ***86.41*** | ***87.26*** |
| ***a**** | ***-1.25*** | ***-1.66*** | ***-1.78*** | ***-1.71*** | ***-2.02*** |
| ***b**** | ***12.7*** | ***12.19*** | ***12.4*** | ***11.57*** | ***11.83*** |
| ***YI*** | ***24.38*** | ***22.76*** | ***22.98*** | ***21.59*** | ***21.64*** |

| | | | | | |
|---|---|---|---|---|---|
| **** to 100 parts of dry compounded resin*** | | | | | |

This disclosure further encompasses the following Aspects.

Aspect 1. A method comprising providing a polymer latex comprising polymer particles in aqueous dispersion, wherein the polymer particles preferably comprise polymers of one or more of vinyl aromatic monomers, acrylic monomers, preferably acrylonitrile monomers, and conjugated diene monomers; adding a peroxide in an amount of 0.005 to 5 parts by weight peroxide per 100 parts by weight of dried polymer to the polymer latex at a pH of at least 8.5, preferably at least 9; and, after contacting, coagulating the polymer latex, wherein a contact time begins with initiation of the adding of the peroxide and ends with initiation of the coagulating.

Aspect 2: The method of Aspect 1 wherein the contact time is at least 2, preferably at least 5 minutes, more preferably at least 10, and most preferably at least 15 minutes.

Aspect 3: The method of Aspect 1 or 2 wherein the contact time is up to 24, preferably up to 12, more preferably up to 6, yet more preferably up to 1 hour.

Aspect 4: The method of any one of the preceding Aspects wherein the coagulating occurs within 3 hours, preferably within 60 minutes, more preferably within 30 minutes, and most preferably within 10 minutes after initiation of the adding of the peroxide.

Aspect 5: The method of any one of the preceding Aspects further comprising drying the coagulated polymer latex.

Aspect 6: The method of any one of the preceding Aspects wherein the providing comprises emulsion polymerization to form the polymer latex.

Aspect 7: The method of any one of the preceding Aspects wherein the polymer latex is a latex of a copolymer of a styrenic monomer and one or more of acrylonitrile monomers and conjugated diene monomers, preferably an acrylonitrile-butadiene-styrene copolymer.

Aspect 8: The method of any one of the preceding Aspects wherein the latex is stored at a temperature in the range of 20 to 70 °C prior to the adding of the peroxide.

Aspect 9: The method of any one of the preceding Aspects wherein two or more batches of the polymer latex are combined to form the provided polymer latex.

Aspect 10: The method of any one of the preceding Aspects further comprising mixing during the contact time.

Aspect 11: The method of any one of the preceding Aspects wherein the pH is no greater than 12, preferably no greater than 11.

Aspect 14: The method of any one of the preceding Aspects wherein the polymer latex comprises 30 to 45 weight percent solids in aqueous solution.

Aspect 15: The method of any one of the preceding Aspects wherein the polymer is characterized by one or more of the following: L* of at least 85, a* of less than -1.6, and Yellowness index of less than 39.

Aspect 16: The method of any one of the preceding Aspects wherein the adding of the peroxide increases L* by at least 3%, decreases a* by at least 1.5, and/or decreases yellowness index by at least 2.5% of the polymer as compared to a polymer not treated with adding of peroxide at a pH of at least 8.5 before coagulation.

Aspect 17: The method of any one of the preceding Aspects wherein the peroxide comprises an organic peroxide, an organic hydroperoxide, hydrogen peroxide or combinations thereof, and preferably, is hydrogen peroxide.

Aspect 18: The method of any one of the preceding Aspects further comprising compounding the polymer with a second polymer.

Aspect 19: The method of any one of the preceding Aspects wherein the polymer has an L* of at least 85, preferably at least 86, and more preferably at least 87.

Aspect 20: The method of any one of the preceding Aspects wherein the polymer has an a* of less than 0, preferably less than -1, more preferably less than -1.5, and most preferably less than -2.

Aspect 21: The method of any one of the preceding Aspects wherein the polymer has a YI of less than 39, preferably less than 38, more preferably less than 37, yet more preferably less than 36, still more preferably less than 35, even more preferably less than 34, and most preferably less than 33.

Aspect 22: The method of any one of the preceding Aspects wherein the polymer after coagulating has an L* at least 3%, preferably at least 4%, more preferably at least 5%, and most preferably at least 6% higher than the L* of a polymer that is otherwise the same but that is not contacted with a peroxide at a pH of 8.5 or more prior to coagulation.

Aspect 23: The method of any one of the preceding Aspects wherein the polymer after coagulating has an L* that is higher by at least 2, preferably at least 2.5, more preferably at least 3, yet more preferably at least 3.5, and most preferably at least 4, than the L* of a polymer that is otherwise the same but that is not contacted with a peroxide at a pH of 8.5 or more prior to coagulation.

Aspect 24: The method of any one of the preceding Aspects wherein the polymer after coagulating has YI less than 2.5%, preferably less than 5%, more preferably less than 10%, most preferably less than 15% or more to a polymer that is otherwise the same but that is not contacted with a peroxide at a pH of 8.5 or more prior to coagulation.

Aspect 25: The method of any one of the preceding Aspects wherein the polymer after coagulating has YI that is lower by at least 1, preferably at least 2, more preferably at least 3, yet more preferably at least 4 and most preferably at least 5 as compared to the YI of a polymer that is otherwise the same but that is not contacted with a peroxide at a pH of 8.5 or more prior to coagulation.

Aspect 26: The process disclosed herein can decrease the a* of the processed resin by at least 1, at least 1.5, or at least 2 as compared to a polymer that is otherwise the same but that is not contacted with a peroxide at a pH of 8.5 or more prior to coagulation.

Aspect 27: The method of any one of preceding Aspects wherein the amount of peroxide is 0.01 to 2, preferably 0.01 to 1, more preferably 0.01 to 0.5, and most preferably 0.01 to 0.2 parts by weight based on 100 parts of dry resin.

All ranges disclosed herein are inclusive of the endpoints, and the endpoints are independently combinable with each other (e.g., ranges of "up to 25 minutes, or, more specifically, 5 to 20 minutes", is inclusive of the endpoints and all intermediate values of the ranges of "5 to 25 minutes," etc.). Moreover, stated upper and lower limits can be combined to form ranges (e.g. "at least 1 or at least 2 minutes" and "up to 10 or 5 minutes" can be combined as the ranges "1 to 10 minutes", or "1 to 5 minutes" or "2 to 10 minutes" or "2 to 5 minutes").

As used herein, "a," "an," "the," and "at least one" do not denote a limitation of quantity and are intended to cover both the singular and plural, unless the context clearly indicates otherwise. For example, "an element" has the same meaning as "at least one element," unless the context clearly indicates otherwise. The term "combination" is inclusive of, for example, blends, mixtures, alloys, and reaction products. Also, "at least one of" means that the list is inclusive of each element individually, as well as combinations of two or more elements of the list, and combinations of at least one element of the list with like elements not named.

The term "or" means "and/or" unless clearly indicated otherwise by context. Reference throughout the specification to "an embodiment," "an aspect," "another aspect," "some aspects," and so forth, means that a particular element (e.g., feature, structure, step, or characteristic) described in connection with the aspect is included in at least one aspect described herein, and may or may not be present in other aspects. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this disclosure belongs.

## Claims

1. A method comprising
providing a polymer latex comprising polymer particles in an aqueous dispersion, wherein the polymer particles comprise polymers of one or more of vinyl aromatic monomers, acrylic monomers, preferably acrylonitrile monomers, and conjugated diene monomers,
adding a peroxide in an amount of 0.005 to 5 parts by weight peroxide per 100 parts by weight of dried polymer to the polymer latex at a pH of at least 8.5, preferably at least 9, and,
after adding the peroxide, coagulating the polymer latex,
wherein a contact time defined as a time from initiation of the adding of the peroxide until the initiation of coagulating is at least 2 minutes..

2. The method of claim 1 wherein the contact time is at least 5 minutes, more preferably at least 10 minutes, and most preferably at least 15 minutes.

3. The method of claim 1 or 2 wherein the contact time is up to 24, preferably up to 12, more preferably up to 6, yet more preferably up to 1 hour.

4. The method of claim 1 or 2 wherein coagulating occurs within 3 hours, preferably within 60 minutes, more preferably within 30 minutes, and most preferably within 10 minutes after initiation of the adding of the peroxide.

5. The method of any one of the preceding claims further comprising drying the coagulated polymer latex.

6. The method of any one of the preceding claims wherein the providing comprises emulsion polymerizing to form the polymer latex.

7. The method of any one of the preceding claims wherein the polymer latex is a latex of a copolymer of a styrenic monomer and one or more of acrylonitrile monomers and conjugated diene monomers, preferably an acrylonitrile-butadiene-styrene copolymer.

8. The method of any of the preceding claims wherein the polymer latex is stored at a temperature of 20 to 70 °C prior to adding the peroxide.

9. The method of any one of the preceding claims wherein two or more batches of the polymer latex are combined to form the provided polymer latex.

10. The method of any one of the preceding claims comprising mixing during the contact time.

11. The method of any one of the preceding claims wherein the pH is no greater than 12, preferably no greater than 11.

12. The method of any one of the preceding claims wherein the polymer latex comprises 30 to 45 weight percent solids in aqueous solution.

13. The method of any one of the preceding claims wherein the adding of the peroxide at a pH of at least 8.5 before the coagulating increases L* by at 2 decreases a* by at least 1.5, and/or decreases yellowness index by at least 1 of the polymer as compared to a polymer that is otherwise the same but is not contacted with peroxide at a pH of at least 8.5 before coagulation.

14. The method of any one of the preceding claims wherein the peroxide comprises an organic peroxide, an organic hydroperoxide, hydrogen peroxide or a combination thereof, and preferably, comprises hydrogen peroxide.

15. The method of any one of the preceding claims further comprising compounding the polymer latex with a second polymer.

## Patentansprüche

1. Verfahren, umfassend
Bereitstellen eines Polymerlatex, umfassend Polymerpartikel in einer wässrigen Dispersion, wobei die Polymerpartikel Polymere aus einem oder mehreren von vinylaromatischen Monomeren, Acrylmonomeren, bevorzugt Acrylnitril-Monomeren, und konjugierten Dienmonomeren umfassen,
Zugeben eines Peroxids in einer Menge von 0,005 bis 5 Gewichtsteilen Peroxid pro 100 Gewichtsteilen getrockneten Polymers zu dem Polymerlatex bei einem pH-Wert von mindestens 8,5, bevorzugt mindestens 9, und
nach Zugeben des Peroxids Koagulieren des Polymerlatex,
wobei eine Kontaktzeit, die als eine Zeit von Einleitung des Zugebens des Peroxids bis zur Einleitung des Koagulierens definiert ist, mindestens 2 Minuten beträgt.

2. Verfahren nach Anspruch 1, wobei die Kontaktzeit mindestens 5 Minuten, bevorzugter mindestens 10 Minuten und besonders bevorzugt mindestens 15 Minuten beträgt.

3. Verfahren nach Anspruch 1 oder 2, wobei die Kontaktzeit bis zu 24, bevorzugt bis zu 12, bevorzugter bis zu 6, noch bevorzugter bis zu 1 Stunde beträgt.

4. Verfahren nach Anspruch 1 oder 2, wobei Koagulieren innerhalb von 3 Stunden, bevorzugt innerhalb von 60 Minuten, bevorzugter innerhalb von 30 Minuten, und besonders bevorzugt innerhalb von 10 Minuten nach Einleitung des Zugebens des Peroxids auftritt.

5. Verfahren nach einem der vorstehenden Ansprüche, weiter umfassend Trocknen des koagulierten Polymerlatex.

6. Verfahren nach einem der vorstehenden Ansprüche, wobei das Bereitstellen Emulsionspolymerisieren umfasst, um den Polymerlatex zu bilden.

7. Verfahren nach einem der vorstehenden Ansprüche, wobei der Polymerlatex ein Latex aus einem Copolymer aus einem Styrolmonomer und einem oder mehreren von Acrylnitril-Monomeren und konjugierten Dienmonomeren, bevorzugt ein AcrylnitrilButadien-Styrol-Copolymer ist.

8. Verfahren nach einem der vorstehenden Ansprüche, wobei der Polymerlatex vor Zugeben des Peroxids bei einer Temperatur von 20 bis 70 °C gelagert wird.

9. Verfahren nach einem der vorstehenden Ansprüche, wobei zwei oder mehr Chargen des Polymerlatex kombiniert werden, um den bereitgestellten Polymerlatex zu bilden.

10. Verfahren nach einem der vorstehenden Ansprüche, umfassend Mischen während der Kontaktzeit.

11. Verfahren nach einem der vorstehenden Ansprüche, wobei der pH-Wert nicht größer als 12, bevorzugt nicht größer als 11 ist.

12. Verfahren nach einem der vorstehenden Ansprüche, wobei der Polymerlatex 30 bis 45 Gewichtsprozent Feststoffe in wässriger Lösung umfasst.

13. Verfahren nach einem der vorstehenden Ansprüche, wobei das Zugeben des Peroxids bei einem pH-Wert von mindestens 8,5 vor dem Koagulieren L* um 2 erhöht, a* um mindestens 1,5 verringert und/oder den Vergilbungsindex um mindestens 1 des Polymers verringert, im Vergleich zu einem Polymer, das ansonsten gleich ist, aber vor der Koagulation nicht mit Peroxid bei einem pH-Wert von mindestens 8,5 in Kontakt gebracht wird.

14. Verfahren nach einem der vorstehenden Ansprüche, wobei das Peroxid ein organisches Peroxid, ein organisches Hydroperoxid, Wasserstoffperoxid oder eine Kombination davon umfasst und bevorzugt Wasserstoffperoxid umfasst.

15. Verfahren nach einem der vorstehenden Ansprüche, weiter umfassend Compoundieren des Polymerlatex mit einem zweiten Polymer.

## Revendications

1. Procédé comprenant
la fourniture d'un latex polymère comprenant des particules de polymère en dispersion aqueuse, où les particules de polymère comprennent des polymères d'un ou de plusieurs de monomères aromatiques vinyliques, de monomères acryliques, de préférence de monomères acrylonitriles, et de monomères diéniques conjugués,
l'ajout d'un peroxyde en une quantité allant de 0,005 à 5 parties en poids de peroxyde pour 100 parties en poids de polymère séché au latex polymère à un pH d'au moins 8,5, de préférence d'au moins 9, et,
après l'ajout du peroxyde, la coagulation du latex polymère,
dans lequel un temps de contact défini comme le temps écoulé entre le début de l'ajout du peroxyde et le début de coagulation, est d'au moins 2 minutes.

2. Procédé de la revendication 1, dans lequel le temps de contact est d'au moins 5 minutes, plus préférablement d'au moins 10 minutes, et idéalement d'au moins 15 minutes.

3. Procédé de la revendication 1 ou 2, dans lequel le temps de contact peut aller jusqu'à 24 heures, de préférence jusqu'à 12 heures, plus préférablement jusqu'à 6 heures, encore plus préférablement jusqu'à 1 heure.

4. Procédé de la revendication 1 ou 2, dans lequel la coagulation se produit dans les 3 heures, de préférence dans les 60 minutes, plus préférablement dans les 30 minutes et, idéalement dans les 10 minutes suivant le début de l'ajout du peroxyde.

5. Procédé de l'une quelconque des revendications précédentes, comprenant en outre le séchage du latex polymère coagulé.

6. Procédé de l'une quelconque des revendications précédentes, dans lequel la fourniture comprend la polymérisation en émulsion pour former le latex polymère.

7. Procédé de l'une quelconque des revendications précédentes, dans lequel le latex polymère est un latex d'un copolymère d'un monomère styrénique et d'un ou de plusieurs de monomères acrylonitriles et de monomères diéniques conjugués, de préférence d'un copolymère acrylonitrile-butadiène-styrène.

8. Procédé de l'une des revendications précédentes, dans lequel le latex polymère est stocké à une température comprise entre 20 et 70°C avant l'ajout du peroxyde.

9. Procédé de l'une quelconque des revendications précédentes, dans lequel deux lots ou plus du latex polymère sont combinés pour former le latex polymère fourni.

10. Procédé de l'une quelconque des revendications précédentes, comprenant le mélange pendant le temps de contact.

11. Procédé de l'une quelconque des revendications précédentes, dans lequel le pH n'est pas supérieur à 12, de préférence n'est pas supérieur à 11.

12. Procédé de l'une quelconque des revendications précédentes, dans lequel le latex polymère comprend 30 à 45 pour cent en poids de matières solides en solution aqueuse.

13. Procédé de l'une quelconque des revendications précédentes, dans lequel l'ajout du peroxyde à un pH d'au moins 8,5 avant la coagulation augmente L* d'au moins 2, diminue a* d'au moins 1,5 et/ou diminue l'indice de jaunissement d'au moins 1 du polymère par rapport à un polymère qui est autrement le même, mais qui n'est pas en contact avec du peroxyde à un pH d'au moins 8,5 avant la coagulation.

14. Procédé de l'une quelconque des revendications précédentes, dans lequel le peroxyde comprend un peroxyde organique, un hydroperoxyde organique, du peroxyde d'hydrogène ou une combinaison de ceux-ci, et de préférence comprend du peroxyde d'hydrogène.

15. Procédé de l'une quelconque des revendications précédentes, comprenant en outre le mélangeage du latex polymère avec un second polymère.
